(19) Europäisches Patentamt / European Patent Office / Office européen des brevets

(11) **EP 2 204 950 B1**

(12) **EUROPEAN PATENT SPECIFICATION**

(45) Date of publication and mention
of the grant of the patent:
**08.03.2017 Bulletin 2017/10**

(51) Int Cl.:
***H04L 12/26*** *(2006.01)*

(21) Application number: **09305004.5**

(22) Date of filing: **05.01.2009**

(54) **Method for modelling buffer capacity of a packet network**

Verfahren zur Modellierung der Pufferspeicherkapazität eines Paketnetzes

Procédé de modélisation de la capacité tampon d'un réseau par paquets

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**07.07.2010 Bulletin 2010/27**

(73) Proprietor: **ALCATEL LUCENT
92100 Boulogne-Billancourt (FR)**

(72) Inventor: **Adriaenssens, Kris
2960, Brecht (BE)**

(74) Representative: **ALU Antw Patent Attorneys
Copernicuslaan 50
2018 Antwerpen (BE)**

(56) References cited:
**EP-A- 1 548 980        EP-A- 1 646 183
US-A1- 2004 233 931    US-A1- 2008 192 647**

**Description**

The present invention relates to a method for determining buffer capacity of a packet network comprising a number of network resources according to the preamble of claim 1. The invention further relates to a traffic analyser according to the preamble of claim 12, to a system according to the preamble of claim 13, and to a program for performing one or more steps of such a method.

US 2004/0233931 discloses a method for calculating jitter buffer depth in packet switching network.

An existing solution to measure the buffer size is to monitor the buffer sizes of the different network element queues by polling the network elements itself. Such tools will typically poll the buffer or port counter of a number of network elements using interfaces such as a Command-line interface (CLI) or a Simple Network Management Protocol (SNMP). The problem of such techniques is that this polling is based on the counter implementation of the vendors, which is not always reliable. Further such methods are not scalable and maintainable because there may be different nodes in the network using different access technologies using different counters and having different interfaces. An example of a tool which can be used for polling using SNMP is the RDDTool from The Cacti Group (www.cacti.net).

The object of the invention is to provide an improved method to determine the buffer size used to buffer data in a packet network under test. More in particular, an aspect of the invention is to provide a method which can also be used when the technology and the topology of the network nodes in this network under test are unknown.

To reach this object, the method according to the invention is distinguished by the features of the characterizing portion of claim 1, comprising:

a) measuring at the egress interface of the packet network, egress times at which a plurality of packets coming from the ingress interface are received at the egress interface;
b) determining an average transmission delay of the plurality of packets from the ingress interface to the egress interface;
c) determining an average egress rate of the plurality of packets based on the egress times; and
d) calculating an equivalent buffer capacity of the network resources using the average egress rate and

average transmission delay.

In other words an equivalent buffer size of a network with a plurality of network resources or of a network with one single network node is calculated in a generic way by measuring the time it takes for a number of packets to travel trough a network from the ingress to the egress interface and by measuring the rate at which this stream leaves the network at the egress interface. The solution is generic and can be applied to measure the buffer size of different types of networks as well as individual nodes.

Note that the term "equivalent buffer size" as used in the present application refers to the allocated buffer size of packets that arrive at the egress interface. This equivalent buffer size will not contain the buffer size used by packets that did not reach the egress interface. In a real network this means that the total buffer size used to store packets will be equal or higher than the equivalent buffer size. The equivalent buffer size will equal the theoretical buffer size if the network is modelled as a single network element with only one point of congestion.

Note that in the present application the term network has to be interpreted in the large sense and refers both to a network with a plurality of network resources and to a link with one individual network node.

According to a possible embodiment a stream comprising the plurality of packets is generated and sent to the ingress interface of the packet network, wherein a time stamp is included in at least one packet of the stream, each time stamp indicating the ingress time at which the corresponding packet was sent to the ingress interface; and the average transmission delay is determined in step b) based on the at least one time stamp and the egress times of the plurality of packets. This is an embodiment which is useful for test labs. A stream of packets is generated and the test is done based on this stream. However, it is also possible to perform the method of the invention in an operational environment, simply using the traffic present in the packet network without having to generate a test stream. Such an embodiment will be specified further down in the text and in claims 7-9.

In theory it is possible to determine the ingress times used in the average delay determination on the basis of a single time stamp and knowledge about the rate at which the packets are generated. However, according to a preferred embodiment every packet of the packets used for the test, includes a time stamp indicating the ingress time at which the corresponding packet was sent to the ingress interface.

According to a variant of this embodiment the plurality of packets of the stream is generated at a rate with a constant value and only some packets of the plurality of packets used for the test includes a time stamp indicating the ingress time at which the corresponding packet was sent to the ingress interface. The time stamps and the constant value will then make it possible to derive the ingress times of every packet of said given number of packets.

According to a further aspect, the stream of packets is sent at a rate higher than the maximum throughput rate of the packet network. In that way the buffers are filled to a maximum, leading to more useful results for the calculated buffer capacity.

When time stamps are used, it is preferred that each time stamp indicates an ingress time at which the corresponding packet was sent to the ingress interface according to a reference clock. Similarly in step a) the egress times can then be measured according to the same reference clock. Typically the measurements at the ingress interface and at the egress interface will be performed by a first network generator/analyser at the ingress interface and a second network generator/analyser at the egress interface, wherein the first and second network generator/analysers have the same reference clock.

According to a possible embodiment, in step b) the average transmission delay of the stream is determined as an average of time differences between corresponding ingress times and egress times of said plurality of packets.

According to a further preferred aspect, in step b), the subsequent determinations of time differences are monitored for a steady state condition. Similarly in step c) the average egress rate is preferably determined, responsive to reaching the steady state condition.

According to a possible embodiment, it is detected at the ingress interface when packet loss occurs, and the steps a)-d) are only performed for packets sent after the packet loss has been detected. This is a way for ensuring that the steady state condition is reached and that the test can be started.

The invention further relates to a traffic analyser adapted for performing any steps of the different embodiments described above of the method of the invention. The traffic analyser is distinguished by the features of the characterizing portion of claim 12, and comprises:

- a reference clock;
- a generating means for generating a stream of a plurality of packets and sending it to an ingress interface of the packet network, said means being adapted for including a time stamp in at least one packet of said plurality of packets, each time stamp indicating the ingress time at which the corresponding packet was sent to the ingress interface according to the reference clock; and/or
- a detecting means for detecting, at an egress interface of the packet network, egress times at which a given number of packets of the stream are received at the egress interface according to the reference clock;
- a calculation means for determining an average transmission delay of the stream from the ingress interface to the egress interface based on said at least one time stamp and the egress times of said given number of packets; and for determining an average egress rate of the stream of packets based on the egress times; and for calculating an equivalent buffer capacity of the network resources using the average egress rate and average transmission delay.

According to another possible embodiment which can be used in an operational environment, and which does not require the generation of a stream for performing the test, the method is further distinguished by measuring at the ingress interface for a plurality of packets selected on the basis of a selection criterion, the ingress times on which said selected plurality of packets are sent to the ingress interface, wherein in step a) the egress times are detected for the received packets fulfilling the same selection criterion, and wherein in step b) the average transmission delay is determined based on the measured ingress and egress times of the received packets fulfilling the selection criterion.

In other words, the traffic passing at the ingress interface and at the egress interface is measured and correlated. The ingress and egress traffic is measured without having to alter the actual content of the packets.

According to a possible embodiment of this variant, the correlation of the packets, i.e. the selection of the packets on the basis of a selection criterion, can be done based on e.g. the IP address, the MAC address, a VLAN ID, a combination thereof, or any other identification built-in in the packet. The test could e.g. be performed for all packets with a certain IP address or for all packets with an IP address which belongs to a certain group of IP addresses, etc.

According to a preferred embodiment of the invention the equivalent buffer size is calculated using the following formula:

```
Equivalent _buffer_size = Avg_delay x Avg_rate x

Avg_payload_size;
```

wherein the Avg_payload_size is the average packet size of the egress packets which is expressed in bytes per packet, wherein the Avg_rate is the average egress rate and Avg_delay is the average transmission delay, and wherein the equivalent buffer size is expressed in bytes.

The invention may be used with a probe for use in the embodiments disclosed above for measuring the traffic at the ingress interface or the egress interface. More in particular, the probe should verify whether the packet fulfils one or more selection criteria, and depending on the outcome of this verification the probe should measure the ingress time or egress time, at the ingress interface or egress interface, respectively.

Further the invention relates to a system which is distinguished by the features of the characterizing portion of claim 13, said system comprising a first probe for performing measurement at the ingress interface, a second probe for performing measurements at the egress interface, and calculation means for determining an average transmission delay of the plurality of packets from the ingress interface to the egress interface; for determining an average egress rate of the plurality of packets based on the egress times; and for calculating an equivalent buffer capacity of the network resources using the average egress rate, the average transmission delay and the average packet size.

Finally the invention relates to a computer program comprising code means adapted to perform any of the steps of the different embodiments of the method of the invention.

The accompanying drawings are used to illustrate presently preferred non-limiting exemplary embodiments of the present invention. The above and other advantages, features and objects of the invention will become more apparent and the invention will be better understood from the following detailed description when read in conjunction with the accompanying drawings in which:

Figure 1 is a schematic view for illustrating a first embodiment of the method of the invention;
Figure 2 is a schematic view for illustrating a second embodiment of the method of the invention.

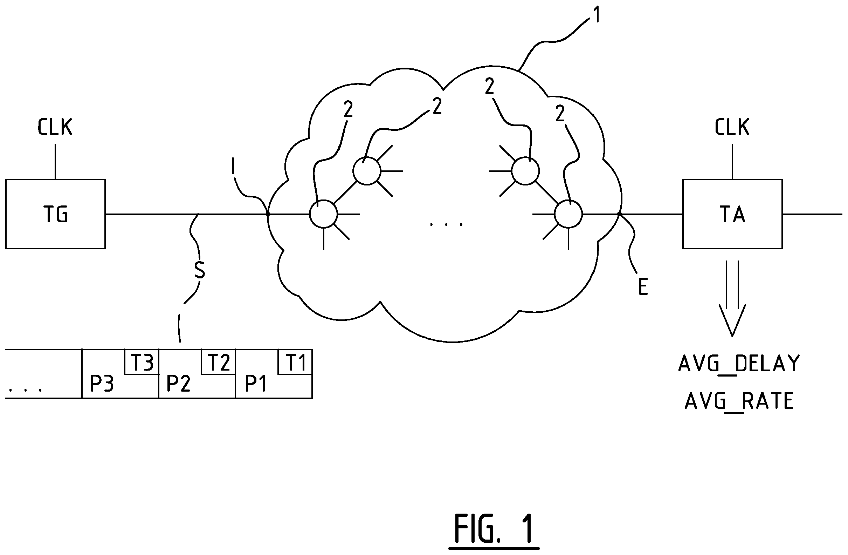

Figure 1 shows a packet network 1 such as an Ethernet network, an IP network, an ATM network, etc or a packet network combining different technologies. A traffic analyser, used as traffic generator TG sends a stream S through the network 1 at an ingress interface I of the network 1. The packets are routed to an egress interface E of the packet network 1 where the packets are further treated by a second network analyser TA used for measuring those packets in order to determine certain network parameters as will be explained below.

A traffic stream S is send trough the network 1 with a rate (packets/s) higher then the maximum network throughput rate which in principle is a known value for a network or network element under test.

Typically the algorithm waits a time until the network delay is stable before starting the test in order to make sure that the network queues are filled up to the maximum level. In other words a first series of packets will be sent to saturate the network before the measurements start in order to obtain a higher accuracy. To verify that the rate at which the packets are generated is high enough, the packet loss at the ingress side is verified. If the packet loss is above a certain limit it can be derived that the steady state condition is reached, i.e. that the network queues are sufficiently filled.

Each stream consists of sequential packets P1, P2, P3, etc, typically sent at an equal rate. Note however, that it is also possible to use a variable rate, for example starting with a low rate and increasing the rate until the rate is sufficiently high for reaching a steady state condition. The skilled person will understand that various rate schemes are possible within the scope of the present invention.

Each packet has a certain payload size in bytes (bytes/packet). Before sending the packets the traffic generator TG incorporates a timestamp into certain or all outgoing packets of the stream. The packets can be for example ATM packets, IP packets, Ethernet packets, etc, depending on the packet network to be modelled. The packets typically have a "payload data" section in which the time stamp can be put, for example. Further a packet typically comprises a "sequence number" section where the sequence number of the packet in the stream is stored. Assuming that the rate at which the packets are generated is known, it is in principle possible to add a time stamp to only one packet of the stream and to determine the ingress times of the other packets from this one time stamp and from the rate. In practice it will be adviseable to include the time stamp in at least a plurality of packets in order to attain a good accuracy. A practical way to implement the invention is then to include a time stamp in every packet, at least after steady state has been reached.

The packets are routed to an egress interface E of the packet network 1, where the network throughput delay is measured by checking the timestamp by a traffic analyser TA, and by measuring the egress times, i.e. the time at which the packets are received at the egress interface, using the same reference clock CLK as used by the traffic generator TG.

Typical traffic analysers currently available on the market are able to provide such a delay measurement. Examples of such traffic analysers are the Spirent Test Center, the Spirent Smartbits, the Spirent AX4000, the Agilent N2X, the IXIA Optixia.

The average throughput delay avg_delay (in seconds) of a given number of packets of the stream is determined by the traffic analyser TA at the egress interface E of the network 1, for example using the following formula:

$$avg\_delay = \frac{1}{n-p} \sum_{i=p}^{n} T_{ri} - T_{i};$$

wherein Ti is the send time of packet i at the ingress interface as derived from the timestamp, Tri is the receipt time of packet I at the egress interface, and (n-p) represents the given number of packets of stream S, wherein (n-p) may be smaller than the total number of packets of the stream S. As explained above it is usual to wait until steady state is reached, leading to a first series of packets (packet 1 to packet (p-1)) which are not used for calculating the average delay. Note that the packets included in the sum are all packets that have arrived at the egress interface. During the steady overload phase, packets are dropped continuously, and the dropped packets will not be part of the calculation. (n-p) refers to the given number of egress packets only, wherein egress packets refer to the packets received at the egress interface.

The average packet rate avg_rate of the traffic stream (in packets/second) is determined by the traffic analyser TA at the egress interface E of the network 1, for example using the following formula:

```
Avg_rate = number_of_egress_packets/measurement_period.
```

In other words, the total number of packets received during a certain measurement period is divided by said measurement period. Again this measurement is preferably done after steady state is reached.

The size of the packets and the number of packets of a stream can vary depending on the network under test. Typically, the size of the packets will be between 64 bytes and 1500 bytes, and the total number of packets of a stream will typically be between 1000 and 10.000.000 packets. Typical buffer capacities measured with the method of the invention are in a range varying from kilobytes to megabytes.

The Equivalent Buffer Size per stream (in bytes) is calculated by the traffic analyser using the following formula:

```
Equivalent_buffer_size = Avg_delay x Avg_rate x
Avg_payload_size;
```

wherein the Avg_payload_size is the average packet size of the egress packets which is expressed in bytes per packet, wherein the Avg_rate is the average egress rate and Avg_delay is the average transmission delay, and wherein the equivalent buffer size is expressed in bytes.

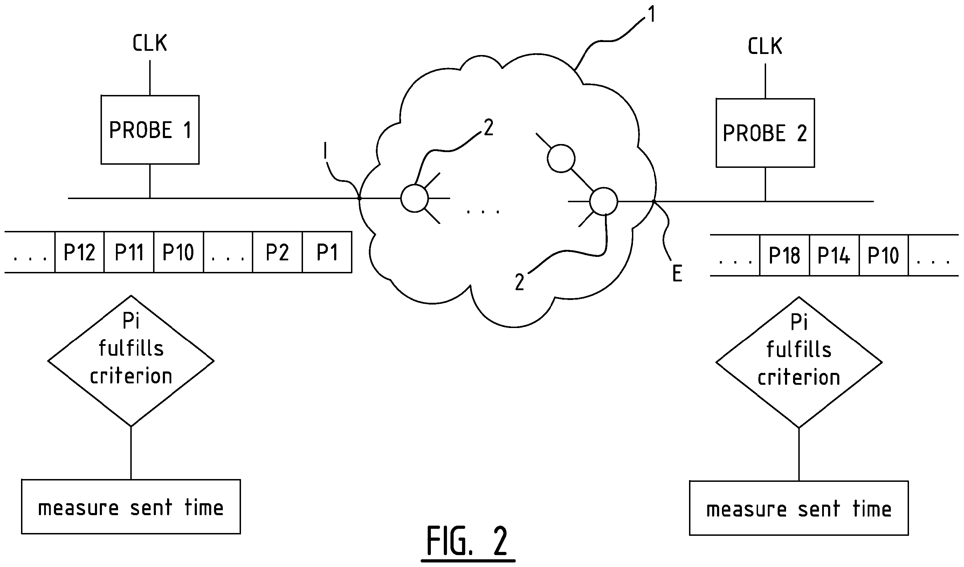

It is noted that when a traffic stream is generated, the payload size will typically be constant. However, for other embodiments (e.g. the embodiment of figure 2 - see below) which use the normal traffic passing through the network for the test, the payload size may be different for different packets.

It is noted that the traffic analysers are typically arranged for being able to function both as a generator of the packet stream S and as a measuring and calculation means for determining the buffer capacity. In that way it is possible to measure the buffer capacity in both directions (from ingress to egress side and the other way around) with the same configuration. Further it will be clear to the skilled person that the actual calculation of the buffer capacity could also take place in a separate device connected with the traffic analyser.

The test results are typically grouped in a test report which is usually generated by companies supplying similar traffic test services such as the Internet Protocol Transformation Center (IPTC) of Alcatel-Lucent.

Figure 2 illustrates a second embodiment which uses the normal traffic passing through the network for the test. Hence, this embodiment can be used in any operational environment. In figure 2 similar elements have been indicated with the same reference numerals as in figure 1.

For the embodiment of figure 2 it is assumed that a traffic stream comprising packets P1, P2, ..., P10, P11, P12, ..., is sent to the ingress interface I. A first probe 1 using a reference clock CLK will verify for every packet whether this packet fulfils a certain selection criterion. If the packet fulfils the criterion, probe 1 will measure the send time of the packet, i.e. the ingress time.

Of course, not all the packets entering the packet network at the ingress interface will be directed to the egress interface. In the example it is assumed that amongst other packets P10, P14 and P18 are sent to the egress interface. At the egress interface a second probe 2 using the same reference clock will verify whether the received packets fulfil the same criterion. If yes, the egress time (i.e. the receipt time) is measured. In the present case it could be that e.g. packets P10, P14 and P18 are selected and that for those packets both the ingress and egress times are measured.

Based on the measurements performed by probe 1 and probe 2, it is then possible to determine the average transmission delay of the packets from the ingress interface to the egress interface. This can e.g. be done using the formula given above for the embodiment of figure 1. Further the average egress rate and the equivalent buffer capacity can be calculated in the same way as described above for the embodiment of figure 1.

Probes which can be used for performing the second embodiment of the method illustrated in figure 2 include amongst others: the Agilent DNA probe and the Ineoquest probe.

While the principles of the invention have been set out above in connection with specific embodiments, it is to be clearly understood that this description is merely made by way of example and not as a limitation of the scope of protection which is determined by the appended claims.

**Claims**

1. Method for determining buffer capacity of a packet network comprising at least one network node, said packet network having an ingress interface and an egress interface, the method comprising

   a) measuring at the egress interface of the packet network, egress times at which a plurality of packets coming from the ingress interface are received at the egress interface;

   **characterized in that** the method further comprises:

   b) determining an average transmission delay of the plurality of packets from the ingress interface to the egress interface;
   c) determining an average egress rate of the plurality of packets based on the egress times; and
   d) calculating an equivalent buffer capacity of the network resources using the average egress rate and average transmission delay.

2. Method according to claim 1, **characterized by** generating a stream comprising the plurality of packets and sending it to an ingress interface of the packet network, at least one packet of the stream including a time stamp, each time stamp indicating the ingress time at which the corresponding packet was sent to the ingress interface; and **by** determining the average transmission delay based on said at least one time stamp and the egress times of the plurality of packets.

3. Method according to claim 2, **characterized in that** every packet of the stream includes a time stamp indicating the ingress time at which the corresponding packet was sent to the ingress interface.

4. Method according to claim 2, **characterized in that** the packets of the stream are generated at a rate with a constant value and **in that** a number of packets of said plurality of packets includes a time stamp indicating the ingress time at which the corresponding packet was sent to the ingress interface, the time stamps of the number of packets and the constant value allowing to derive the ingress times of every packet of said plurality of packets.

5. Method according to claim 2, **characterized in that** the stream of packets at the ingress interface is sent at a higher rate than the maximum throughput rate of the packet network.

6. Method according to claim 2, **characterized in that** each time stamp indicates an ingress time at which the corresponding packet was sent to the ingress interface according to a reference clock, and **that** in step a) the egress times are being measured according to the reference clock.

7. Method according to claim 1, **characterized by** measuring at the ingress interface for each packet of a plurality of packets selected on the basis of a selection criterion, the ingress time at which said packet is sent to the ingress interface, wherein in step a) the egress times are detected for the received packets fulfilling the same selection criterion, and wherein in step b) the average transmission delay is determined based on the measured ingress and egress times.

8. Method according to claim 7, **characterized in that** the selection criterion is based on an identification label of the packet.

9. Method according to claim 8, **characterized in that** the identification label is one of the following: an IP address, a MAC address, a VLAN ID, or a combination thereof.

10. Method according to any of the previous claims, **characterized in that** in step b) the subsequent determinations of time differences are monitored for a steady state condition, and **that** in step c) the average egress rate is determined responsive to reaching the steady state condition.

11. Method according to any of the previous claims, **characterized in that** it is detected at the ingress interface when packet loss occurs, and that steps a)-d) are only performed for packets sent after the packet loss has been detected.

12. Traffic analyser comprising:

- a reference clock;
- a generating means for generating a stream of a plurality of packets and sending it to an ingress interface of the packet network, said means being adapted for including a time stamp in at least one packet of said plurality of packets, each time stamp indicating the ingress time at which the corresponding packet was sent to the ingress interface according to the reference clock; and/or
- a detecting means for detecting, at an egress interface of the packet network, egress times at which a given number of packets of the stream are received at the egress interface according to the reference clock; **characterized in that** the traffic analyzer further comprises:
- a calculation means for determining an average transmission delay of the stream from the ingress interface to the egress interface based on said at least one time stamp and the egress times of said given number of packets; and for determining an average egress rate of the stream of packets based on the egress times; and for calculating an equivalent buffer capacity of the network resources using the average egress rate and average transmission delay.

13. System for determining buffer capacity of a packet network comprising at least one network node, said packet network having an ingress interface and an egress interface, wherein the system comprises a first probe for measuring at an ingress interface of the packet network, for each packet of a plurality of packets selected on the basis of a selection criterion, the ingress time at which said packet is sent;

a second probe for measuring at an egress interface of the packet network, for each packet of a plurality of packets selected on the basis of the selection criterion, the egress time at which said packet is received; **characterized in that** the system further comprises:

calculation means for determining an average transmission delay of the plurality of packets from the ingress interface to the egress interface; for determining an average egress rate of the plurality of packets based on the egress times; and for calculating an equivalent buffer capacity of the network resources using the average egress rate and average transmission delay.

14. Computer program comprising code which when run on a computer will carry out the method steps of any of the claims 1-11.

**Patentansprüche**

1. Verfahren zur Bestimmung der Pufferspeicherkapazität eines Paketnetzwerks, das mindestens einen Netzwerkknoten umfasst, wobei das besagte Paketnetzwerk eine Eingangsschnittstelle und eine Ausgangsschnittstelle aufweist, wobei das Verfahren Folgendes umfasst:

a) Messen von Ausgangszeiten, an der Ausgangsschnittstelle des Paketnetzwerks, zu welchen eine Vielzahl von Paketen, die von der Eingangsschnittstelle kommen, an der Ausgangsschnittstelle empfangen werden;

**dadurch gekennzeichnet, dass** das Verfahren weiterhin Folgendes umfasst:

b) Bestimmen einer durchschnittlichen Übertragungsverzögerung von der Vielzahl von Paketen aus der Eingangsschnittstelle an die Ausgangsschnittstelle;
c) Bestimmen einer durchschnittlichen Ausgangsrate von der Vielzahl von Paketen basierend auf den Ausgangszeiten; und
d) Berechnen einer entsprechenden Pufferspeicherkapazität der Netzwerkressourcen unter Verwendung der durchschnittlichen Ausgangsrate und durchschnittlichen Übertragungsverzögerung.

2. Verfahren nach Anspruch 1, **gekennzeichnet durch** Erzeugen eines Stroms, der die Vielzahl von Paketen umfasst, und Senden von diesem an eine Eingangsschnittstelle des Paketnetzwerks, wobei mindestens ein Paket des Stroms einen Zeitstempel umfasst, wobei jeder Zeitstempel die Eingangszeit angibt, zu der das entsprechende Paket an die Eingangsschnittstelle gesendet wurde; und **durch**
Bestimmen der durchschnittlichen Übertragungsverzögerung basierend auf dem besagten mindestens einen Zeitstempel und den Ausgangszeiten von der Vielzahl von Paketen.

3. Verfahren nach Anspruch 2, **dadurch gekennzeichnet, dass** jedes Paket des Stroms einen Zeitstempel umfasst, der die Eingangszeit angibt, zu der das entsprechende Paket an die Eingangsschnittstelle gesendet wurde.

4. Verfahren nach Anspruch 2, **dadurch gekennzeichnet, dass** die Pakete des Stroms in einer Rate mit einem konstanten Wert erzeugt werden, und dadurch, dass eine Anzahl von Paketen von der besagten Vielzahl von Paketen einen Zeitstempel umfasst, der die Eingangszeit angibt, zu der das entsprechende Paket an die Eingangsschnittstelle gesendet wurde, wobei es die Zeitstempel der Anzahl von Paketen und der konstante Wert ermöglichen, die Eingangszeiten von jedem Paket von der besagten Vielzahl von Paketen abzuleiten.

5. Verfahren nach Anspruch 2, **dadurch gekennzeichnet, dass** der Strom von Paketen an der Eingangsschnittstelle in einer höheren Rate gesendet wird als die maximale Durchlaufrate des Paketnetzwerks.

6. Verfahren nach Anspruch 2, **dadurch gekennzeichnet, dass** jeder Zeitstempel eine Eingangszeit angibt, zu der das entsprechende Paket an die Eingangsschnittstelle gemäß einem Referenztaktgeber gesendet wurde, und dass in Schritt a) die Ausgangszeiten gemäß dem Referenztaktgeber gemessen werden.

7. Verfahren nach Anspruch 1, **gekennzeichnet durch** Messen der Eingangszeit, an der Eingangsschnittstelle für jedes Paket von einer Vielzahl von Paketen, die auf Basis eines Auswahlkriteriums ausgewählt werden, zu der das besagte Paket an die Eingangsschnittstelle gesendet wird, wobei in Schritt a) die Ausgangszeiten für die empfangenen Pakete erkannt werden, die das gleiche Auswahlkriterium erfüllen, und wobei in Schritt b) die durchschnittliche Übertragungsverzögerung basierend auf den gemessenen Eingangs- und Ausgangszeiten bestimmt wird.

8. Verfahren nach Anspruch 7, **dadurch gekennzeichnet, dass** das Auswahlkriterium auf einem Identifikationslabel des Pakets basiert.

9. Verfahren nach Anspruch 8, **dadurch gekennzeichnet, dass** das Identifikationslabel eines aus Folgendem ist: IP-Adresse, MAC-Adresse, VLAN-ID oder eine Kombination davon.

10. Verfahren nach einem beliebigen der vorstehenden Ansprüche, **dadurch gekennzeichnet, dass** in Schritt b) die nachfolgenden Bestimmungen von Zeitunterschieden für einen Beharrungszustand überwacht werden, und dass in Schritt c) die durchschnittliche Ausgangsrate als Antwort auf das Erreichen des Beharrungszustands bestimmt wird.

11. Verfahren nach einem beliebigen der vorstehenden Ansprüche, **dadurch gekennzeichnet, dass** an der Eingangsschnittstelle erkannt wird, wenn ein Paketverlust auftritt, und dass Schritte a)-d) nur für Pakete ausgeführt werden, die gesendet werden, nachdem der Paketverlust erkannt wurde.

12. Verkehrsanalysator, umfassend:

- einen Referenztaktgeber;
- ein Erzeugungsmittel zum Erzeugen eines Stroms einer Vielzahl von Paketen und Senden von diesem an eine Eingangsschnittstelle des Paketnetzwerks, wobei das besagte Mittel angepasst ist, um einen Zeitstempel in mindestens einem Paket von der besagten Vielzahl von Paketen zu umfassen, wobei jeder Zeitstempel die Eingangszeit angibt, zu der das entsprechende Paket an die Eingangsschnittstelle gemäß dem Referenztaktgeber gesendet wurde; und/oder
- ein Erkennungsmittel zum Erkennen an einer Ausgangsschnittstelle des Paketnetzwerks von Ausgangszeiten, zu welchen eine gegebene Anzahl von Paketen des Stroms an der Ausgangsschnittstelle gemäß dem Referenztaktgeber empfangen werden; **dadurch gekennzeichnet, dass** der Verkehrsanalysator weiterhin Folgendes umfasst:
- ein Rechenmittel zum Bestimmen einer durchschnittlichen Übertragungsverzögerung des Stroms aus der Eingangsschnittstelle an die Ausgangsschnittstelle basierend auf dem besagten mindestens einen Zeitstempel und den Ausgangszeiten der besagten gegebenen Anzahl von Paketen; und zum Bestimmen einer durchschnittlichen Ausgangsrate des Stroms von Paketen basierend auf den Ausgangszeiten; und zum Berechnen einer entsprechenden Pufferspeicherkapazität der Netzwerkressourcen unter Verwendung der durchschnittlichen Ausgangsrate und durchschnittlichen Übertragungsverzögerung.

13. System zur Bestimmung der Pufferspeicherkapazität eines Paketnetzwerks, das mindestens einen Netzwerkknoten umfasst, wobei das besagte Paketnetzwerk eine Eingangsschnittstelle und eine Ausgangsschnittstelle aufweist, wobei das System einen ersten Sensor zum Messen der Eingangszeit umfasst, zu der das besagte Paket gesendet wird, an einer Eingangsschnittstelle des Paketnetzwerks, für jedes Paket von einer Vielzahl von Paketen, das auf Basis eines Auswahlkriteriums ausgewählt wird; einen zweiten Sensor zum Messen der Ausgangszeit, zu der das besagte Paket empfangen wird, an einer Ausgangsschnittstelle des Paketnetzwerks, für jedes Paket von einer Vielzahl von Paketen, das auf Basis des Auswahlkriteriums ausgewählt wird; **dadurch gekennzeichnet, dass** das System weiterhin Folgendes umfasst:

Rechenmittel zum Bestimmen einer durchschnittlichen Übertragungsverzögerung von der Vielzahl von Paketen aus der Eingangsschnittstelle an die Ausgangsschnittstelle; zum Bestimmen einer durchschnittlichen Ausgangsrate von der Vielzahl von Paketen basierend auf den Ausgangszeiten; und zum Berechnen einer entsprechenden Pufferspeicherkapazität der Netzwerkressourcen unter Verwendung der durchschnittlichen Ausgangsrate und durchschnittlichen Übertragungsverzögerung.

**14.** Computerprogramm, umfassend einen Code, das bei Ausführung auf einem Computer die Verfahrensschritte nach einem beliebigen der Ansprüche 1 bis 11 durchführt.

## Revendications

**1.** Procédé pour déterminer la capacité tampon d'un réseau de paquets comprenant au moins un noeud de réseau, ledit réseau de paquets ayant une interface d'entrée et une interface de sortie, le procédé comprenant l'étape suivante

a) mesurer au niveau de l'interface de sortie du réseau de paquets, des temps de sortie auxquels une pluralité de paquets provenant de l'interface d'entrée sont reçus au niveau de l'interface de sortie ;

**caractérisé en ce que** le procédé comprend en outre les étapes suivantes :

b) déterminer un délai de transmission moyen de la pluralité de paquets de l'interface d'entrée à l'interface de sortie ;
c) déterminer une vitesse de sortie moyenne de la pluralité de paquets sur la base des temps de sortie ; et
d) calculer une capacité tampon équivalente des ressources de réseau en utilisant la vitesse de sortie moyenne et le délai de transmission moyen.

**2.** Procédé selon la revendication 1, **caractérisé par** la génération d'un flux comprenant la pluralité de paquets et l'envoi de celui-ci à une interface d'entrée du réseau de paquets, au moins un paquet du flux incluant une estampille temporelle, chaque estampille temporelle indiquant le temps d'entrée auquel le paquet correspondant a été envoyé à l'interface d'entrée ; et par la détermination du délai de transmission moyen sur la base de ladite au moins une estampille temporelle et des temps de sortie de la pluralité de paquets.

**3.** Procédé selon la revendication 2, **caractérisé en ce que** chaque paquet du flux inclut une estampille temporelle indiquant le temps d'entrée auquel le paquet correspondant a été envoyé à l'interface d'entrée.

**4.** Procédé selon la revendication 2, **caractérisé en ce que** les paquets du flux sont générés à une vitesse avec une valeur constante et **en ce qu'**un nombre de paquets de ladite pluralité de paquets inclut une estampille temporelle indiquant le temps d'entrée auquel le paquet correspondant a été envoyé à l'interface d'entrée, les estampilles temporelles du nombre de paquets et la valeur constante permettant de dériver les temps de sortie de chaque paquet de ladite pluralité de paquets.

**5.** Procédé selon la revendication 2, **caractérisé en ce que** le flux de paquets au niveau de l'interface d'entrée est envoyé à une vitesse supérieure à la vitesse de débit maximum du réseau de paquets.

**6.** Procédé selon la revendication 2, **caractérisé en ce que** chaque estampille temporelle indique un temps d'entrée auquel le paquet correspondant a été envoyé à l'interface d'entrée selon une horloge de référence, et que, à l'étape a) les temps de sortie sont mesurés selon l'horloge de référence.

**7.** Procédé selon la revendication 1, **caractérisé par** la mesure au niveau de l'interface d'entrée pour chaque paquet d'une pluralité de paquets sélectionné sur la base d'un critère de sélection, du temps d'entrée auquel ledit paquet est envoyé à l'interface d'entrée, dans lequel à l'étape a) les temps de sortie sont détectés pour les paquets reçus remplissant le même critère de sélection, et dans lequel à l'étape b) le délai de transmission moyen est déterminé sur la base des temps d'entrée et de sortie mesurés.

**8.** Procédé selon la revendication 7, **caractérisé en ce que** le critère de sélection est basé sur une étiquette d'identification du paquet.

**9.** Procédé selon la revendication 8, **caractérisé en ce que** l'étiquette d'identification est un de ce qui suit : une adresse IP, une adresse MAC, un ID de VLAN, ou une combinaison de ceux-ci.

**10.** Procédé selon l'une quelconque des revendications précédentes, **caractérisé en ce que**, à l'étape b) les déterminations subséquentes de différences de temps sont surveillées pour une condition de régime permanent, et que, à l'étape c), la vitesse de sortie moyenne est déterminée en réponse au fait d'atteindre la condition de régime permanent.

**11.** Procédé selon l'une quelconque des revendications précédentes, **caractérisé en ce qu'**il est détecté au niveau de l'interface d'entrée lorsqu'une perte de paquets se produit, et que les étapes a) à d) ne sont exécutées que pour des paquets envoyés après que la perte de paquets a été détectée.

**12.** Analyseur de trafic comprenant :

- une horloge de référence ;
- un moyen de génération pour générer un flux d'une pluralité de paquets et l'envoyer à une interface d'entrée du réseau de paquets, ledit moyen étant adapté pour inclure une estampille temporelle dans au moins un paquet de ladite pluralité de paquets, chaque estampille temporelle indiquant le temps d'entrée auquel le paquet correspondant a été envoyé à l'interface d'entrée selon l'horloge de référence ; et/ou
- un moyen de détection pour détecter, au niveau d'une interface de sortie du réseau de paquets, des temps de sortie auxquels un nombre donné de paquets du flux sont reçus au niveau de l'interface de sortie selon l'horloge de référence ; **caractérisé en ce que** l'analyseur de trafic comprend en outre :
- un moyen de calcul pour déterminer un délai de transmission moyen du flux de l'interface d'entrée à l'interface de sortie sur la base de ladite au moins une estampille temporelle et des temps de sortie dudit nombre donné de paquets ; et pour déterminer une vitesse de sortie moyenne du flux de paquets sur la base des temps de sortie ; et pour calculer une capacité tampon équivalente des ressources de réseau en utilisant la vitesse de sortie moyenne et le délai de transmission moyen.

**13.** Système pour déterminer la capacité tampon d'un réseau de paquets comprenant au moins un noeud de réseau, ledit réseau de paquets ayant une interface d'entrée et une interface de sortie, le système comprenant une première sonde pour mesurer au niveau d'une interface d'entrée du réseau de paquets, pour chaque paquet d'une pluralité de paquets sélectionné sur la base d'un critère de sélection, le temps d'entrée auquel ledit paquet est envoyé ; une seconde sonde pour mesurer au niveau d'une interface de sortie du réseau de paquets, pour chaque paquet d'une pluralité de paquets sélectionné sur la base du critère de sélection, le temps de sortie auquel ledit paquet est reçu ; **caractérisé en ce que** le système comprend en outre :

des moyens de calcul pour déterminer un délai de transmission moyen de la pluralité de paquets de l'interface d'entrée à l'interface de sortie ; pour déterminer une vitesse de sortie moyenne de la pluralité de paquets sur la base des temps de sortie ; et pour calculer une capacité tampon équivalente des ressources de réseau en utilisant la vitesse de sortie moyenne et le délai de transmission moyen.

**14.** Programme informatique comprenant un code qui, lorsqu'il est exécuté sur un ordinateur, effectuera les étapes de procédé de l'une quelconque des revendications 1 à 11.

FIG. 1

EP 2 204 950 B1

CLK

PROBE 2

1

E

| ... | P18 | P14 | P10 | ... |

Pi fulfills criterion

measure sent time

2

2

CLK

PROBE 1

| P12 | P11 | P10 | ... | P2 | P1 |

Pi fulfills criterion

measure sent time

**FIG. 2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040233931 A